# EUROPÄISCHE PATENTSCHRIFT

(11) **EP 1 835 816 B1**
(45) Veröffentlichungstag und Bekanntmachung des Hinweises auf die Patenterteilung: **28.11.2012**
(21) Anmeldenummer: 05850385.5
(22) Anmeldetag: 23.12.2005
(51) Int. Cl.: A23J 3/30

(54) **VERFAHREN ZUR HERSTELLUNG VON PROTEINHYDROLYSATEN**
METHOD FOR PRODUCING PROTEIN HYDROLYSATES
PROCEDE DE PRODUCTION D'HYDROLYSATS PROTEIQUES

(30) Priorität: 23.12.2004 DE 102004063258
(43) Veröffentlichungstag der Anmeldung: 26.09.2007
(73) Patentinhaber: Animox GmbH, 12489 Berlin (DE)
(72) Erfinder: HÖHLING, Axel, 13051 Berlin (DE); SCHULTZE, Maria, 12489 Berlin (DE); MOTHES, Sigmar, 12489 Berlin (DE)
(74) Vertreter: Gulde, Klaus W.
(86) Internationale Anmeldenummer: PCT/EP2005/014183
(87) Internationale Veröffentlichungsnummer: WO 2006/069803

(56) Entgegenhaltungen:
- EP-A- 0 653 165
- EP-A- 1 193 223
- EP-A- 1 312 611
- DATABASE WPI Section Ch, Week 200134 Derwent Publications Ltd., London, GB; Class B04, AN 2001-317284 XP002379430 & CN 1 283 397 A (UNIV SHANGHAI FIAOTONG) 14. Februar 2001 (2001-02-14)

## Beschreibung

Die Erfindung bezieht sich auf ein Verfahren zur Herstellung von Hydrolysaten aus proteinhaltigen pflanzlichen und tierischen Rohstoffen, wobei es sich bei den Rohstoffen um Tiermehl oder Weizenschrot handelt.

Proteinhaltige pflanzliche und tierische Natur- und Abprodukte können in vielfältiger Weise für eine stoffliche Verwertung aufbereitet werden. In der Regel ist es dafür notwendig, die Makromoleküle (Proteine) in Aminosäuren einerseits und Peptide, die aus mehreren Aminosäuren bestehen, anderseits aufzuspalten. So beschreiben z. B. EP-A-0 653 165 und CN 1283397A die Hydrolyse von Blut.

Bekannt ist die Protein-Hydrolyse, die durch Zusatz von Säuren oder Basen unter Temperatureinwirkung zu einem Aminosäuregemisch führt. Nach Aufspaltung des Proteins muss die Lösung neutralisiert werden. Allerdings wird bei der Säurehydrolyse die wichtige und wirtschaftlich interessante Aminosäure Tryptophan zerstört.

Die Proteinspaltung kann auch enzymatisch mit Hilfe von Proteasen mikrobiellen Ursprungs durchgeführt werden. Dabei werden sowohl Endopeptidasen, die Peptidketten in unterschiedliche Fragmente entsprechend ihrer Spaltungsspezifität zerlegen, als auch Exopeptidasen, die Aminosäuren liefern, eingesetzt. Methoden und Verfahren der ph-Wert-abhängigen und der enzymatischen Proteinhydrolyse werden u. a. in GB 846682, RU 2132142 und US 6,221,423 dargelegt.

Makromoleküle komplexer Materialien aus tierischen und pflanzlichen Abfällen, wie Kohlenhydrate, Fette und Proteine, können auch unter Einwirkung von erhöhtem Druck und erhöhter Temperatur gespalten werden. Die entstehenden Bruchstücke werden so einer mikrobiell gestützten energetischen Verwertung, z.B. der Methanbildung, zugänglich gemacht.

In US 6,365,047, ES 2162462T und DE 10117321 A1 wird der Stand der Technik der Druck-Temperatur-Hydrolyse hinsichtlich der verfahrenstechnischen Lösungen dargestellt.

In DE 10113537 A1 ist die Druck-Temperaturbehandlung für Tiermehl beschrieben. Vorwiegend unter dem Aspekt der Inaktivierung des BSE-Erregers von infiziertem Tiermehl und Fleischbrei wirken im basischen Milieu ein Druck von 2,5 bar und eine Temperatur von 150 °C mindestens 15 min auf die wässrige Tiermehlsuspension ein.

Nach EP-A-1 406 508 wird BSE-freies Tiermehl durch Totalhydrolyse des Proteins des Tiermehls zu Aminosäuren unter Zugabe von Säuren/Laugen und ggf. nachfolgender Behandlung mit Proteasen gespalten. Dem Spaltprozess muss sich eine Neutralisation anschließen. EP-A-1 312 611 offenbart ein Verfahren zur kontinuierlichen Degradation von Proteinen bei über 375°C unter einem Druck von mindestens 22,05 MPa und Reaktionszeiten von 0,001 bis 30 Sekunden. EP-A-1 193 223 beschreibt die Behandlung tierischer Nebenprodukte, die biogene Restmassen bzw. organische Abfälle wie Tierkadaver und dergleichen sind, wobei die entspannte Hydrolyselösung mit Mikroorganismen mit dem Ziel der Biogasgewinnung umgesetzt wird.

All diese Verfahren sind jedoch nicht dazu geeignet, Hydrolysate in definierten Molekulargewichtsgrenzen herzustellen.

Der vorliegenden Erfindung liegt die Aufgabe zugrunde, ein Verfahren anzubieten, mit dem es möglich ist, Proteinhydrolysate mit definierten Molekulargewichtsgrenzen ohne pH-Wert einstellende und ohne enzymatische Verfahrensschritte herzustellen.

Die Lösung der Aufgabe erfolgt mit den Merkmalen des Anspruches 1.

Danach ist das Verfahren zur Herstellung von Proteinhydrolysaten aus proteinhaltigen pflanzlichen und tierischen Rohstoffen, wobei es sich bei den Rohstoffen um Tiermehl oder Weizenschrot handelt, dadurch gekennzeichnet, dass die Rohstoffe im wässrigen Medium durch eine anhand einer Systemkennlinie gesteuerte Temperatur- und Reaktionszeiteinwirkung und unter gezieltem Druckaufbau in einem Reaktionsraum gespalten werden, wobei die Spaltung der Proteinmoleküle im Temperaturbereich zwischen 180°C und 220°C und mit einem Druck zwischen 50 und 75 bar und Reaktionszeiten von 25 bis 40 min durchgeführt wird und der Druck gezielt so eingestellt wird, dass er zwischen dem 1,1- und 10-fachen des Dampfdruckes der jeweiligen Temperatur liegt und dass die Suspension nach dem Spaltprozess in ein Sediment, das die unlöslichen Bestandteile des Ausgangsmaterials enthält, und einen wässrigen Überstand, in dem die Spaltprodukte der Rohstoffe gelöst sind, getrennt wird, wobei die Spaltprodukte Proteinhydrolysate wie Peptide und Aminosäuren sind.

Mit dem erfindungsgemäßen Verfahren erhält man Proteinhydrolysate mit einem Molekulargewicht < 20 kDa.

Vorteilhafte Weiterbildungen sind in den Unteransprüchen angegeben.

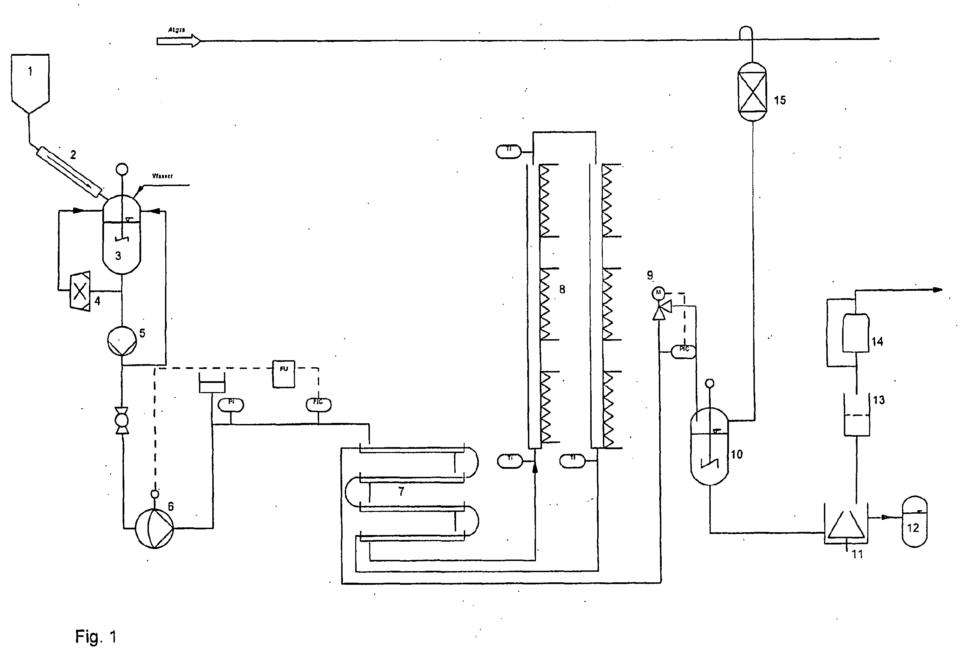

In einer Ausgestaltung der Erfindung erfolgt die Spaltung in Rohrreaktoren kontinuierlich (Fig.1) oder nach dem Batch-Prinzip unter gleichzeitiger Vermeidung von Nebenprodukten.

In einer weiteren Ausgestaltung wird der Spaltprozess durch eine Analyse der Molekülgröße der Peptide im wässrigen Überstand kontrolliert.

In einer weiteren Ausgestaltung des Verfahrens wird der Spaltprozess durch laufende Ermittlungen (Analysen) der Molekülgröße der Peptide im wässrigen Überstand kontrolliert.

In einer weiteren Ausgestaltung ist vorgesehen, dass vor dem Eintrag in den Reaktor der Rohstoff mit Wasser durch eine Kolloid-Mühle mit bestimmter Spaltgröße und bestimmter Dauer, vorzugsweise 15 bis 60 min, zu einer förderfähigen Suspension verarbeitet wird. Vorteilhafterweise wird dadurch bereits ein Voraufschluss der Moleküle erreicht.

Da erfindungsgemäß der Temperaturbereich der Spaltung zwischen 180°C und 220°C gewählt wird und ein gezielter Druck zwischen dem 1,1- und dem 10-fachen des Dampfdruckes der jeweiligen Temperatur eingestellt wird, wird vorteilhafterweise ein einheitlich flüssiger Phasenzustand innerhalb des Systems sichergestellt. Durch den permanent flüssigen Zustand der Suspension ist deren kontinuierliche und störungsfreie Förderung gewährleistet.

Eine weitere Ausgestaltung sieht vor, dass die Rohstoffe vorzugsweise durch Reinigungs- bzw. Extraktionsschritte vorbehandelt zur Proteinspaltung eingesetzt werden.

Eine weitere Ausgestaltung sieht vor, dass der Rohstoff zur Einstellung einer bestimmten Korngröße, vorzugsweise < 2 mm, gesiebt wird.

In einer weiteren Ausgestaltung werden Konzentrationen von 5 bis 40% wässriger Maische direkt behandelt, oder nach Sedimentation der ungelösten Bestandteile wird lediglich der Überstand verarbeitet.

Eine weitere Ausgestaltung sieht vor, dass die Suspension mittels einer Pumpe im Kreislauf geführt wird. Insbesondere eignet sich eine Booster-Pumpe, um die Suspension im Kreislauf zu fördern. Die Prozesspumpe wird suspensionsgerecht angeschlossen.

In einer weiteren Ausgestaltung der Erfindung ist vorgesehen, dass nach Entspannung des Reaktionsproduktes die festen von den wasserlöslichen Bestandteilen getrennt werden.

Die löslichen Spaltprodukte können in flüssiger oder getrockneter Form für chemische Verfahren eingesetzt werden. Sie eignen sich weiter dazu, als Nährmedien zur Kultivierung von Mikroorganismen eingesetzt zu werden.

Erfindungsgemäß wird durch die Parameter Temperatur, Druck und Reaktionszeit in einem Reaktor das Spaltungsmuster der Proteine festgelegt. Dabei liegt insbesondere der Druck beständig oberhalb des Dampfeigendrucks von Wasser, so dass die Einhaltung eines Einphasensystems im Reaktionsverlauf durchgängig gesichert wird.

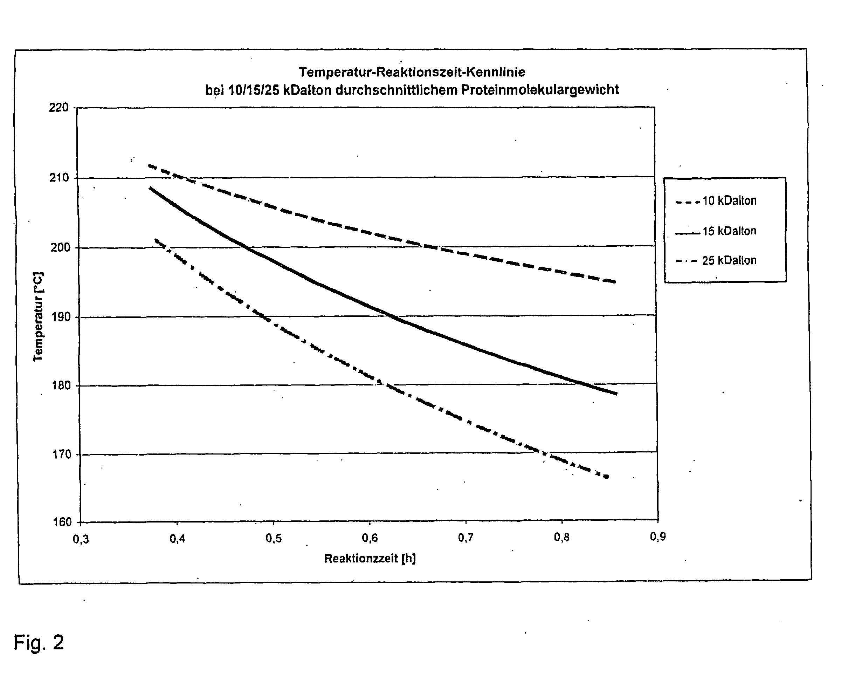

Überraschenderweise wurde gefunden, dass durch die gesteuerte Druck-Temperatureinwirkung und die Reaktionszeit auch ohne pH- . Veränderung und ohne Enzymzusatz ein definiertes Peptid-Aminosäuregemisch aus proteinhaltigen Rohstoffen gewonnen werden kann. Unter strikter Einhaltung von vorgegebenen Systemkennlinien (Fig. 2) wird mit dem erfindungsgemäßen Verfahren ein Material gewonnen, das als Grundstoff für biotechnologische und chemische Synthesen und Prozesse geeignet ist.

Über die Analyse der Molekülgrößen der Peptide und der mikrobiellen Verwertbarkeit der Spaltprodukte wird der Prozess kontrolliert. Durch die Verwendung von Schutzgas können unerwünschte Nebenreaktionen ausgeschlossen werden.

Die vorliegende Erfindung liefert ein Verfahren zur stofflichen Verwertung von Tiermehl, das variabel an die benötigten produktbezogenen Prozessbedingungen anpassungsfähig ist.

Das der Erfindung zugrunde liegende Verfahren ist geeignet, zugleich die Zerstörung des BSE-Erregers zu gewährleisten, wenn die Prozessführung erfinderisch so gestaltet wird, dass das Aminosäure-Peptid-Gemisch Molekulargewichte der Einzelkomponenten unter 20 kDa aufweist. Bekannt ist, dass das Molekulargewicht des BSE-Erregers 27 kDa bis 30 kDa beträgt (Prusiner, St. B. (1996) TIBS 21, 482 - 487: Molecular biology and pathogenesis of prion diseases*).*

Das Verfahren kann sowohl in kontinuierlich arbeitenden Rohrreaktoren als auch in Batch-Reaktoren ausgeführt werden. Rohrreaktoren bieten den großen Vorteil, dass das Reaktorvolumen jederzeit sich ändernden Qualitäten des Ausgangsmaterials angepasst werden kann.

Die Erfindung wird anhand von Figuren beispielhaft erläutert.

Es zeigen
- Fig. 1: eine schematische Darstellung des Verfahrensablaufes,
- Fig. 2: eine beispielhafte Darstellung von Systemkennlinien (Temperatur-Reaktionszeit) im kontinuierlichen Reaktor,
- Fig. 3: eine beispielhafte Darstellung der Abhängigkeit des erfindungsgemäßen Verfahrens von Reaktionszeit und Temperatur
und
- Fig. 4: eine Darstellung der Beispiele R1 bis R5.

In Fig. 1 ist beispielhaft der Ablauf des erfindungsgemäßen Verfahrens dargestellt.

Vor dem Eintrag der Rohstoffe in ein Silo 1 wird der Rohstoff gesiebt, um Fremdbestandteile und das Überkorn zu entfernen. Dann wird der Rohstoff durch eine an sich bekannte Austragsvorrichtung 2 aus dem Silo 1 ausgetragen und in einem Rührbehälter 3 mit Wasser gemischt und anschließend durch eine Kolloidmühle 4 mit definierter Spaltweite zerkleinert und suspendiert. Durch die Zerkleinerung in der Kolloidmühle 4 wird die Suspension homogenisiert, und durch den mechanischen Aufschluss der Biomasse wird eine bessere hydrothermale Spaltung der Proteine erreicht. Um ein Sedimentieren und Absetzen zu verhindern, wird die Suspension im Rührbehälter 3 gerührt. Nach dem Suspendieren saugt eine Boosterpumpe 5 handelsüblichen Typs die Suspension an und fördert diese im Kreislauf in den Rührbehälter 3 zurück. Der Behälter wird weiterhin gerührt.

Der Zustrom zu einer Prozesspumpe 6 erfolgt aus der Druckleitung der Booster-Pumpe 5. Durch die Prozesspumpe 6 wird anlagenseitig ein Druck von 50-75 bar eingestellt. Die Suspension gelangt dann zunächst in einen Wärmeübertrager 7, in dem sie durch das aus dem Reaktor 8 austretende Spaltprodukt im Gegenstrom erwärmt wird. Dabei wird die Suspension von ca. 20 °C auf 120 °C - 140 °C erwärmt. Das Spaltprodukt kühlt sich dabei von ca. 180 °C - 220 °C auf 30 °C - 60 °C ab.

Nach dem Wärmeübertrager 7 wird die Suspension in den Reaktor 8 geleitet. Der Reaktionsraum besteht aus mehreren Rohrreaktoren, die in Reihe geschaltet sind. Der Reaktor 8 wird von außen beheizt und die Suspension auf Temperaturen von 180 °C - 220 °C erwärmt. Nach dem Eintritt in den Reaktor 8 werden unter Druck- und Temperatureinfluss die Proteine aus dem Rohstoff zu Peptiden und Aminosäuren gespalten.

Durch statische Mischeinrichtungen im Wärmeübertrager 7 und/oder vor dem Reaktor 8 und/oder im Reaktor 8 besteht die Möglichkeit, eine Durchmischung des Stoffstromes vorzunehmen. Nachdem das Spaltprodukt den Reaktor 8 verlassen hat und im Wärmeüberträger 7 abgekühlt ist, wird es mittels eines Druckreduzierventils 9 auf Umgebungsbedingungen entspannt. Diese Entspannung kann einstufig und/oder zweistufig, vorzugsweise jedoch einstufig erfolgen. Die in einem Entspannungsbehälter 10 anfallenden Gase werden in einen externen Abgaswäscher 15 geleitet, um eventuell enthaltene Geruchsstoffe abzuscheiden. Das im Entspannungsbehälter 10 gesammelte Hydrolysat wird anschließend durch eine Zentrifuge/einen Dekanter 11 so weiterbehandelt, dass dabei das vorhandene Sediment abgetrennt wird. Das Sediment wird in einem Sammelbehälter 12 gesammelt. Nachfolgend wird die so gewonnene lösliche Phase (Überstand) durch eine Filtration 13, vorzugsweise eine Ultrafiltration, weiter aufgetrennt. Das daraus erhaltene Filtrat kann in einer Trocknung 14 getrocknet werden und so oder in flüssiger Form zum Einsatz kommen.

Fig. 2 zeigt Temperatur-Reaktionszeit-Kennlinien bei kontinuierlicher Durchführung des Verfahrens. Bei Einhaltung eines bestimmten Profils der Parameter Reaktionstemperatur und Reaktionszeit wird bei einem vorgegebenen Reaktionsdruck mit dem Temperatur-Druclc-Hydrolyseverfahren ein definiertes durchschnittliches Molekulargewicht der Proteine erreicht. Als zusätzliche Einflussgrößen kommen Anlagenparameter und Trockensubstanzgehalt in der Suspension in Betracht. Zu erkennen ist ein deutlicher Einfluss von Reaktionszeit und Temperatur. Um gleiche Produkte zu erreichen, muss bei geringerer Reaktionszeit die Temperatur erhöht werden bzw. bei geringerer Temperatur längere Reaktionszeiten gewählt werden. Bei Verfahrensführung gemäß oberer Linie entstehen im Durchschnitt Moleküle mit einem Molekulargewicht von 10 kDa. Bei Verfahrensführung gemäß mittlerer Linie entstehen im Durchschnitt Moleküle mit einem Molekulargewicht von 15 kDa und bei Verfahrensführung gemäß unterer Linie im Durchschnitt solche von 25 kDa.

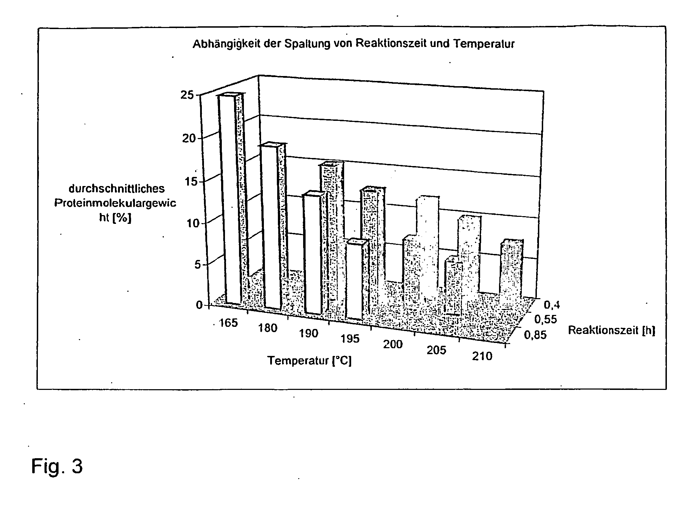

Fig. 3 zeigt die Abhängigkeit des erfindungsgemäßen Verfahrens (Proteinspaltung) von der Reaktionszeit und der Spaltungstemperatur. Zu erkennen sind folgende Abhängigkeiten:
1. Mit steigender Temperatur sinkt das durchschnittliche Peptid-Molekulargewicht. Somit wird mehr Protein gespalten und man erhält kleinere Proteinfragmente (Peptide und Aminosäuren).
2. Mit steigender Reaktionszeit sinkt das durchschnittliche Molekulargewicht bei gleicher Temperatur. Eine längere Reaktionszeit bewirkt demnach eine weitere Spaltung der Proteine in kleinere Fragmente.
3. Die Daten sind anlagenspezifisch bei bestimmten Druckeinstellungen aufgenommen worden. Veränderungen dieser Einflussgrößen bewirken abweichende Spaltungsergebnisse der Hochdruckhydrolyse.

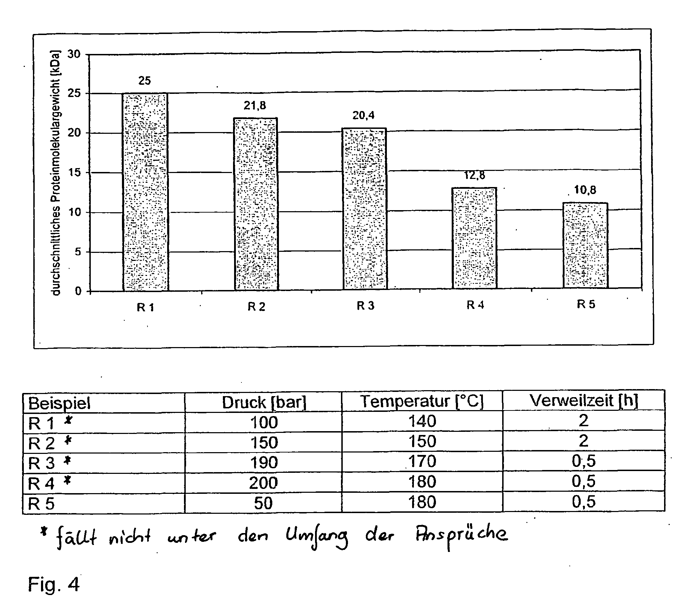

In Fig. 4 sind die Beispiele R1, R2, R3, R4 und das Ausführungsbeispiel R5 dargestellt. Es werden unterschiedliche Verfahrensparameter (Druck, Temperatur, Reaktionszeit) dargestellt. Es wird beispielhaft belegt, dass durch spezifische Einstellung von Druck, Temperatur und Reaktionszeit in der Anlage verschiedene durchschnittliche Molekulargewichte erhalten werden.

Die Erfindung wird anhand weiterer Beispiele näher erläutert.

### Beispiel 1

Als Rohprodukt wird in Verarbeitungsbetrieben für Schlachtnebenprodukte hergestelltes Tiermehl eingesetzt. Das Tiermehl wird gesiebt, um Fremdbestandteile und Überkorn (> 2 mm) zu entfernen. In einem Rührbehälter 3 wird unter Rühren mit Hilfe einer Kolloidmühle 4 eine 30%-ige Tiermehl-Wasser-Suspension hergestellt. Die Prozesspumpe 6 fördert die Suspension aus dem Vorlagebehälter und verdichtet diese auf einen Druck von > 50 bar (Ü). Die Temperatur im Reaktor 8 beträgt > 200°C, die Reaktionszeit 30 min und der Durchsatz 100 kg/h. Nach der Spaltung wird die Hydrolysat-Suspension einstufig vom Prozessdruck auf Umgebungsdruck entspannt.

Das gesammelte Hydrolysat wird anschließend durch Separation und Filtration vom Sediment getrennt. Nachfolgend wird eine Ultrafiltration 13 mit einem cut off von 20 kDa durchgeführt. Das Filtrat wird vorzugsweise in einem Sprühtrockner 14 getrocknet. Bei 300°C Zuluft- und 95°C Ablufttemperatur wird ein trockenes, rieselfähiges Pulver gewonnen.

Die Ausbeute an Trockenpulver beträgt 35 % bezogen auf die Trockensubstanz des Ausgangsmaterials. Die proteinogenen Verbindungen (Peptide, Aminosäuren) liegen bei 89 % der Trockensubstanz des Produktes. Die Gelchromatographie des Produktes zeigt, dass das durchschnittliche Molekulargewicht der Probe bei 7 kDa liegt.

### Beispiel 2 (fällt nicht unter den Umfang der Ansprüche)

Als Rohprodukt wird durch Verarbeitungsbetriebe für Schlachtnebenprodukte hergestelltes Tiermehl der Kategorie II eingesetzt. Es wird eine Maische aus 70 g Tiermehl in 350 ml Wasser hergestellt. Diese Maische wird in einem Batch-Reaktor vorgelegt. Unter Rühren wird eine Temperatur von 200 °C eingestellt. Unter Stickstoffatmosphäre wird ein Druck von 100 bar aufgebaut. Die Reaktionszeit beträgt 120 min.

Die Probe wird in der Zentrifuge 20 min bei 3.000 g separiert. Die unlöslichen Bestandteile (Sediment) werden abgetrennt und der Überstand als Reaktionsprodukt für die weitere Analytik verwendet. Das Produkt hat eine Ausbeute von 58 % bezogen auf die Trockensubstanz des Ausgangsmaterials. Die proteinogenen Verbindungen liegen bei 81 % der Trockensubstanz des Produktes. Die Gelchromatographie des Produktes zeigt, dass 100 % der Probe ein Molekulargewicht < 20 kDa hat.

### Beispiel 3 (fällt nicht unter den Umfang der Ansprüche)

Als Rohprodukt wird durch Verarbeitungsbetriebe für Schlachtnebenprodukte hergestelltes Tiermehl der Kategorie III eingesetzt. Es wurde eine Maische aus 70 g Tiermehl in 350 ml Wasser hergestellt. Diese Maische wird in einem Batch-Reaktor vorgelegt. Unter Rühren wird eine Temperatur von 140 °C eingestellt. Unter Stickstoffatmosphäre wird ein Druck von 100 bar aufgebaut. Die Reaktionszeit beträgt 120 min.

Die Probe wird in der Zentrifuge 20 min bei 3.000 g separiert. Die unlöslichen Bestandteile (Sediment) werden abgetrennt und der Überstand als Reaktionsprodukt für die weitere Analytik verwendet. Das Produkt hat eine Ausbeute von 40 % bezogen auf die Trockensubstanz des Ausgangsmaterials. Der Anteil an proteinogenen Substanzen (Peptiden/Aminosäuren) des Produktes liegt bei 84 % der Trockensubstanz des Spaltproduktes. Die Gelchromatographie des Produktes zeigt, dass 56,2 % der Probe ein Molekulargewicht < 20 kDa hat.

### Beispiel 4

Als Rohprodukt wird Weizenschrot eingesetzt. Es wird eine Maische aus 87,5 g Weizenschrot in 350 ml Wasser hergestellt. Diese Maische wird in einem Batch-Reaktor vorgelegt. Unter Rühren wird eine Temperatur von 180°C eingestellt. Unter Stickstoffatmosphäre wird ein Druck von 50 bar aufgebaut. Die Reaktionszeit beträgt 30 min.

Die Probe wird in der Zentrifuge 20 min bei 3.000 g separiert. Die unlöslichen Bestandteile (Sediment) werden abgetrennt und der Überstand als Reaktionsprodukt mit einem 0,45 µm Filter filtriert und für die weitere Analytik verwendet. Das Produkt hat eine Ausbeute von 79,5 % bezogen auf die Trockensubstanz des Ausgangsmaterials. Der Anteil an proteinogenen Verbindungen liegt bei 6 % der Trockensubstanz des Spaltproduktes. Die Gelchromatographie des Produktes zeigt, dass 99,5 % der Probe ein Molekulargewicht < 20 kDa hat.

Die genannten Beispiele werden durch folgende Methoden analytisch begleitet und kontrolliert:

### Bestimmung der Trockensubstanz zur Ermittlung der Produktausbeute

Das Trockengewicht umfasst die gelösten und ungelösten Inhaltsstoffe einer Probe, welche nach der Trocknung bei 103°C zurückbleiben. Die Trocknung erfolgt solange bis ein konstantes Gewicht erreicht ist. Zur Auswertung wird das Gewicht auf das eingesetzte Volumen bezogen.

Für die Bestimmung des Trockengewichtes wird das Standardverfahren nach DIN 38409 - H 1 - 1 eingesetzt. Das Trockengewicht wird sowohl von 20 ml Überstand als auch vom Sediment von 80 ml gespaltener Tiermehlsuspension ermittelt.

### Bestimmung der proteinogenen Verbindungen

Anorganisch und organisch gebundener Stickstoff wird im alkalischen Milieu durch einen Aufschluss mit Peroxodisulfat zu Nitrat oxidiert. Die Nitrationen reagieren in schwefel- und phosphorsaurer Lösung mit 2,6 - Dimethylphenol zu einem Nitrophenol. Es wird analog DIN EN ISO 11905-1 mit einem Küvettentest (Fa. Dr. Lange, LCK 338) gearbeitet. Aus dem Gesamtstickstoffgehalt kann nach Abzug der anorganischen Stickstofffraktionen die Menge an proteinogenen Verbindungen (Peptide, Aminosäuren) berechnet werden.

### Gelchromatographie

Die Gelchromatographie ist ein Verfahren, bei dem mittels porösen Gelmaterials eine Trennung von Molekülen nach ihrer Größe erfolgt. Größere Moleküle werden zuerst eluiert, später die kleineren. Auf der Grundlage eines geeigneten Standards mit definierten Molekülgrößen ist die Molekülgrößenbestimmung durch Vergleich möglich. Die Gelchromatographie wurde auf einer Pharmacia-Anlage mit einer Säule (Durchmesser: 1,6 cm, Länge: 30 cm, Säulenvolumen: 60,3 ml) durchgeführt. Die Detektion der Proteine und Peptide erfolgt bei 280 nm. Als stationäre Phase wird Säulenmaterial Sephadex G - 100 (Trennbereich von 4 - 150 kDa) verwendet. Als mobile Phase wird PBS-Puffer genutzt. Zur Bestimmung der Molekülgrößen wird als Markersubstanz ein Gelchromatographie-Standard der Fa. Biorad verwendet.

### Bestimmung des Mikroorganismenwachstums

Zur Überprüfung der mikrobiellen Verwertbarkeit der Proteinhydrolysate wird das Mikroorganismenwachstum mit der Probe als Nährsubstrat bestimmt. Von einer auf Nähragar befindlichen Mikroorganismenkultur wird eine einzelne Kolonie in einen Schüttelkolben mit Nährlösung angeimpft und unter entsprechenden Bedingungen 18 h kultiviert. Als Hauptkultur wird 100 ml Medium in einem 500 ml Schüttelkolben verwendet. Die einzelnen Medien werden mit je 1% der Vorkultur angeimpft. Bei entsprechender Temperatur und Belüftung (Schüttler) werden diese Hauptkulturen kultiviert. Der Verlauf der Wachstumskurve wird durch Bestimmung der Trübung im Photometer und durch die Bestimmung der Lebendkeimzahl im Stundentakt aufgenommen und anschließend ausgewertet

### Bestimmung der Keimzahl durch Trübungsmessung

Die Bestimmung der Keimzahl durch Trübungsmessung im Photometer ist eine Methode zur indirekten Bestimmung der Keimzahl einer Mikroorganismensuspension. Bei der Messung einer Probe im Photometer wird sichtbares Licht einer bestimmten Wellenlänge (600 nm) zum Teil absorbiert und zum Teil gestreut und kann als optische Dichte (OD) auf der Photometerskala abgelesen werden. Die optische Dichte nimmt proportional zur Keimzahl zu. Es ist eine Mindestkeimzahl von 5 x 10⁶ KBE/ml für die Messung notwendig. Da die Messung der OD nur bis ca. 0,3 linear proportional zur Zellzahl ist, muss bei einer höheren OD die Probe verdünnt werden.

### Bestimmung der Lebendkeimzahl mittels Spatelverfahren

Bei der Lebendkeimzahlbestimmung werden die Zellen bestimmt, die in der Lage sind, eine Kolonie zu bilden. Das Ergebnis wird in "koloniebildenden Einheiten" (KBE) angegeben. In Verdünnungen mit dem Faktor 1:10 wird von der Probe eine Verdünnungsreihe bis zur erwarteten Zellzahl (z.B. 10⁸ Zellen/ml) hergestellt und die letzten drei Verdünnungen im Spatelverfahren ausplattiert. Die Platten werden 24 h bebrütet und die Zahl der Kolonien ausgezählt und auf KBE/ml berechnet.

### Bezeichnung:

- 1: Silo
- 2: Austragsvorrichtung
- 3: Rührbehälter
- 4: Kolloidmühle
- 5: Booster-Pumpe
- 6: Prozesspumpe
- 7: Wärmeübertrager
- 8: Reaktor
- 9: Druckreduzierventil
- 10: Entspannungsbehälter
- 11: Zentrifuge/Dekanter
- 12: Sammelbehälter
- 13: Filtration
- 14: Trocknung
- 15: Abgaswäscher

## Patentansprüche

1. Verfahren zur Herstellung von Proteinhydrolysaten aus proteinhaltigen pflanzlichen und tierischen Rohstoffen, wobei es sich bei den Rohstoffen um Tiermehl oder Weizenschrot handelt,
**dadurch gekennzeichnet, dass**
die Rohstoffe im wässrigen Medium durch eine anhand einer Systemkennlinie gesteuerte Temperatur- und Reaktionszeiteinwirkung und unter gezieltem Druckaufbau in einem Reaktionsraum gespalten werden, wobei die Spaltung der Proteinmoleküle im Temperaturbereich zwischen 180°C und 220°C und mit einem Druck zwischen 50 und 75 bar und Reaktionszeiten von 25 bis 40 min durchgeführt wird und der Druck gezielt so eingestellt wird, dass er zwischen dem 1,1- und 10-fachen des Dampfdruckes der jeweiligen Temperatur liegt, und die Suspension nach dem Spaltprozess in ein Sediment, das die unlöslichen Bestandteile des Ausgangsmaterials enthält, und einen wässrigen Überstand, in dem die Spaltprodukte der Rohstoffe gelöst sind, getrennt wird.

2. Verfahren nach Anspruch 1,
**dadurch gekennzeichnet, dass**
die Spaltung in Rohrreaktoren kontinuierlich oder nach dem Batch-Prinzip ausgeführt wird.

3. Verfahren nach einem der Ansprüche 1 oder 2,
**dadurch gekennzeichnet, dass**
der Spaltprozess durch laufende Ermittlungen (Analysen) der Molekülgröße der Peptide im wässrigen Überstand kontrolliert wird.

4. Verfahren nach einem der Ansprüche 1 bis 3,
**dadurch gekennzeichnet, dass**
vor dem Eintrag in den Reaktor der Rohstoff mit Wasser (Maische) durch eine Kolloid-Mühle mit bestimmter Spaltgröße und bestimmter Dauer, vorzugsweise 15 bis 60 min, zu einer förderfähigen Suspension verarbeitet wird.

5. Verfahren nach einem der Ansprüche 1 bis 4,
**dadurch gekennzeichnet, dass**
der Rohstoff zur Einstellung einer bestimmten Korngröße, vorzugsweise < 2 mm, gesiebt wird.

6. Verfahren nach einem der Ansprüche 1 bis 5,
**dadurch gekennzeichnet, dass**
Konzentrationen von 5 bis 40 % wässriger Maische direkt behandelt werden und/oder nach Sedimentation der Maische der Überstand verarbeitet wird.

7. Verfahren nach einem der Ansprüche 1 bis 6,
**dadurch gekennzeichnet, dass**
die Suspension im Kreislauf geführt wird.

8. Verfahren nach einem der Ansprüche 1 bis 7,
**dadurch gekennzeichnet, dass**
nach der Entspannung des Reaktionsproduktes die festen von den wasserlöslichen Bestandteilen getrennt werden.

## Claims

1. A method for manufacturing protein hydrolysates from protein-containing plant and animal raw materials wherein the raw materials are animal meal or wheat meal, **characterised in that** the raw materials are split in an aqueous medium by a temperature and reaction time effect controlled by means of a system characteristic and under targeted pressure build-up in a reaction space, wherein the splitting of the protein molecules is carried out in a temperature range between 180 °C and 220 °C and at a pressure between 50 and 75 bar and reaction times of 25 to 40 min and a targeted pressure is set between 1.1 and 10 times the steam pressure of the respective temperature and following the splitting process the suspension is separated into a sediment, which contains the insoluble constituents of the starting material, and an aqueous supernatant, in which the split products of the raw materials are dissolved.

2. The method as claimed in claim 1, **characterised in that** splitting is carried out in tube reactors continuously or according to the batch principle.

3. The method as claimed in any one of claims 1 or 2, **characterised in that** the splitting process is controlled by ongoing determinations (analyses) of the molecule size of the peptides in the aqueous supernatant.

4. The method as claimed in any one of claims 1 to 3, **characterised in that** before entering the reactor the raw material is processed with water (mash) by a colloid mill with specific splitting size and specific duration, preferably 15 to 60 min, to a pourable suspension.

5. The method as claimed in any one of claims 1 to 4, **characterised in that** the raw material is sifted to set a specific grain size, preferably < 2 mm.

6. The method as claimed in any one of claims 1 to 5, **characterised in that** concentrations of 5 to 40 % of the aqueous mash are treated directly and/or following sedimentation of the mash the supernatant is processed.

7. The method as claimed in any one of claims 1 to 6, **characterised in that** the suspension is circulated.

8. The method as claimed in any one of claims 1 to 7, **characterised in that** after the reaction product is released the solid constituents are separated from the water-soluble constituents.

## Revendications

1. Procédé de fabrication d'hydrolysats de protéine à partir de matières premières végétales et animales contenant des protéines, lesdites matières premières étant de la farine animale ou du gruau de blé,
**caractérisé en ce que**
les matières premières sont dégradées en milieu aqueux dans une chambre de réaction mise sous une pression définie en contrôlant la température et la durée de réaction de façon à ce que leur effets conjoints soient conformes à une ligne caractéristique, la dégradation des molécules de protéine étant réalisée à des températures comprises entre 180 °C et 220 °C et à une pression entre 50 et 75 bar et durant un temps de réaction compris entre 25 et 40 min, la pression étant ajustée à une valeur qui est entre 1,1 et 10 fois supérieure à la pression de vapeur correspondant à une température donnée, et la suspension étant séparée, au terme du processus de dégradation, en un sédiment contenant les composants insolubles de la matière de départ et en un surnageant aqueux dans lequel les produits de la dégradation des matières premières sont dissous.

2. Procédé selon la revendication 1,
**caractérisé en ce que**
la dégradation est réalisée dans des réacteurs tubulaires en mode continu ou en mode discontinu (batch).

3. Procédé selon l'une des revendications 1 ou 2,
**caractérisé en ce que**
le processus de dégradation est contrôlé en déterminant (par analyse) continuellement la taille de molécule que présente les peptides dans le surnageant aqueux.

4. Procédé selon l'une des revendications 1 à 3,
**caractérisé en ce qu'**
avant d'être introduite dans le réacteur, la matière première est mélangée à l'eau (trempage) puis traitée, pendant une durée définie, de préférence comprise entre 15 et 60 min, dans un broyeur colloïdal présentant une dimension de fente définie, pour ainsi obtenir une suspension apte au transport.

5. Procédé selon l'une des revendications 1 à 4,
**caractérisé en ce que**
la matière première subit un tamisage pour obtenir une granulométrie définie, de préférence < 2 mm.

6. Procédé selon l'une des revendications 1 à 5,
**caractérisé en ce que**
les mélanges aqueux présentant une concentration de matière comprise entre 5 et 40 % sont directement soumis au traitement et/ou lesdits mélanges subissent une sédimentation pour ensuite traiter le surnageant.

7. Procédé selon l'une des revendications 1 à 6,
**caractérisé en ce que**
la suspension est recyclée.

8. Procédé selon l'une des revendications 1 à 7,
**caractérisé en ce que**,
suite au retour à la pression ambiante, les produits de la réaction sont séparés en leurs composants d'une part solides et d'autre part hydrosolubles.
